# EUROPEAN PATENT APPLICATION

(11) **EP 4 598 026 A1**
(43) Date of publication of application: **06.08.2025**
(21) Application number: 23871515.5
(22) Date of filing: 10.08.2023
(51) Int. Cl.: H04N 19/463

(54) **DATA ENCODING DEVICE, DATA DECODING DEVICE AND DATA PROCESSING SYSTEM**

(30) Priority: 28.09.2022 JP 2022154436
(71) Applicant: NEC Corporation, 108-8001 Tokyo (JP)
(72) Inventor: CHONO Keiichi, Tokyo 108-8001 (JP)
(74) Representative: Betten & Resch
(86) International application number: PCT/JP2023/029263
(87) International publication number: WO 2024/070273

(57) **Abstract**

The data encoding device 10 includes a video encoding unit 11 which encodes a video to generate a video bitstream, a feature encoding unit 12 which encodes a feature of the video to generate a feature bitstream, and a synchronization unit 13 which synchronizes a random-access point in the video bitstream with a random-access point in the feature bitstream.

## Description

### Technical Field

This invention relates to a data encoding device, a data decoding device, a data encoding method, a data decoding method, and a data processing system used in machine recognition task processing.

### Background Art

SC29, that is one of the SC (Sub Committee) of ISO/IEC JTC1, is responsible for standardization of encoding of audio, video and multimedia information. WG11, that is one of the WG (Working Group), is responsible for video encoding, media transmission, streaming, audio encoding, etc.

In WG11, standardization of a video compression method specialized for machine learning called Video Coding for Machines (VCM) is being considered. VCM has functions of video encoding suitable for machine recognition task processing and feature encoding for task processing. Non-patent literature 1 discloses use cases of VCM.

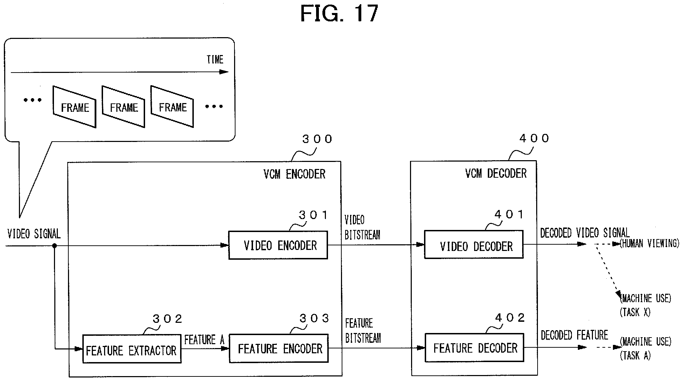

Fig. 17 is a block diagram showing the data processing system using VCM. The data processing system shown in Fig. 17 includes a VCM encoder 300 and a VCM decoder 400. The VCM encoder 300 and the VCM decoder 400 are communicatively connected through a transmission line, for example. Take for example the case where the VCM encoder 300 generates a video bitstream and a feature bitstream related to feature A for some machine processing task A.

The arrows in FIG. 17 indicate a direction of signal (data) flow in a straightforward manner, but do not exclude bidirectionality. This is true for other block diagrams.

The VCM encoder 300 includes a video encoder 301, a feature extractor 302, and a feature encoder 303.

The video encoder 301 encodes each video frame (see Fig. 17) at each time in the digitized video signal to generate a video bitstream.

The feature extractor 302 extracts feature A of the video signal from the video frame at each time. The feature encoder 303 encodes the feature A to generate a feature bitstream.

The VCM decoder 400 includes a video decoder 401 and a feature decoder 402.

The video decoder 401 decodes a video bitstream to generate a decoded video signal. The decoded video signal is used for human viewing or visual confirmation. The decoded video signal may be used for task X, which is a different machine processing task than task A.

The feature decoder 402 decodes the feature bitstream to generate feature A (decoded feature A). The decoded feature A is used for task A of machine processing.

### Citation List

### Non-Patent Literature

Non-Patent Literature 1: "Use cases and requirements for Video Coding for Machines", ISO/IEC JTC1/SC29/WG11 w19365, April 2020
Non-Patent Literature 2: Keiichi Chono, et al, "Reduced-reference image quality assessment using distributed source coding", IEEE International Conference on Multimedia and Expo, June 2008 Multimedia and Expo, June 2008

### Summary of Invention

### Technical Problem

The background art does not guarantee simultaneous random access to a video bitstream and a feature bitstream for a given time.

Therefore, the purpose of this invention is to guarantee simultaneous random access to a video bitstream and a feature bitstream.

### Solution to Problem

The data encoding device according to the present invention includes video encoding means for encoding a video to generate a video bitstream, feature encoding means for encoding a feature of the video to generate a feature bitstream, and synchronizing means for synchronizing a random-access point in the video bitstream with a random-access point in the feature bitstream.

The data decoding device according to the present invention includes video decoding means for receiving a video bitstream which is generated by encoding a video and in which a random-access point is set to decode the video bitstream, and feature decoding means for receiving a feature bitstream which is generated by encoding a feature of the video and in which a random-access point that is aligned in time with the random-access point in the video bitstream is set to decode the feature bitstream.

The data encoding method according to the present invention includes encoding a video to generate a video bitstream, encoding a feature of the video to generate a feature bitstream, and synchronizing a random-access point in the video bitstream with a random-access point in the feature bitstream.

The data decoding method according to the present invention includes receiving a video bitstream which is generated by encoding a video and in which a random-access point is set to decode the video bitstream, and receiving a feature bitstream which is generated by encoding a feature of the video and in which a random-access point that is aligned in time with the random-access point in the video bitstream is set to decode the feature bitstream.

The data encoding program according to the present invention causes a computer to execute a process of encoding a video to generate a video bitstream, a process of encoding a feature of the video to generate a feature bitstream, and a process of synchronizing a random-access point in the video bitstream with a random-access point in the feature bitstream.

### Advantageous Effects of Invention

According to the present invention, simultaneous random access to a video bitstream and a feature bitstream is guaranteed.

### Brief Description of Drawings

[Fig. 1] It depicts an explanatory diagram showing an example of a relationship between a video bitstream and a feature bitstream in the time direction.
[Fig. 2] It depicts a block diagram showing the data processing system of the first example embodiment.
[Fig. 3] It depicts a flowchart showing the operation of the VCM encoder in the first example embodiment.
[Fig. 4] It depicts a flowchart showing the operation of the VCM decoder in the first example embodiment.
[Fig. 5] It depicts an explanatory diagram showing an example of a relationship between a video bitstream and a feature bitstream in the time direction.
[Fig. 6] It depicts a block diagram showing the data processing system of the second example embodiment.
[Fig. 7] It depicts a flowchart showing the operation of the VCM encoder in the second example embodiment.
[Fig. 8] It depicts a flowchart showing the operation of the VCM decoder in the second example embodiment.
[Fig. 9] It depicts an explanatory diagram showing an example of a relationship between a video bitstream and a feature bitstream in the time direction.
[Fig. 10] It depicts an explanatory diagram showing the first modification of the data processing system.
[Fig. 11] It depicts an explanatory diagram showing the encoding of feature frame data using an error-correcting code.
[Fig. 12] It depicts an explanatory diagram showing the decoding of feature frame data using an error-correcting code.
[Fig. 13] It depicts a block diagram showing a specific configuration example of the data processing system.
[Fig. 14] It depicts a block diagram showing a configuration example of an information processing system.
[Fig. 15] It depicts a block diagram showing the main part of the data encoding device.
[Fig. 16] It depicts a block diagram showing the main parts of the data decoding device.
[Fig. 17] It depicts a block diagram showing the data processing system using VCM.

### Description of Embodiments

Hereinafter, example embodiments of the present invention will be explained with reference to the drawings.

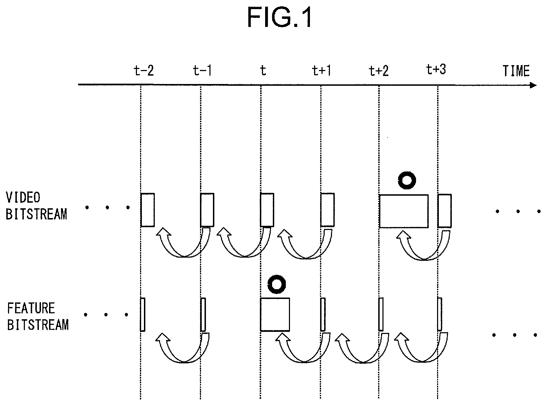

Fig. 1 is an explanatory diagram showing an example of a relationship between a video bitstream (video frame data) and a feature bitstream (feature frame data) in the time direction. In Fig. 1, arrows indicate frame dependencies. Circles indicate frames that have no dependencies with other frames. In other words, circled frames are frames for which the encoding and decoding processes are closed within the frame. In the time direction, the position where such a frame exists is called a random-access point. In Fig. 1, the width of the rectangle indicating a frame corresponds to the data volume. For example, a frame at a random-access point in a video bitstream is an encoded I (Intra coded) video frame.

In the example shown in Fig. 1, the random-access point in the video bitstream and the random-access point in the feature bitstream are not synchronized. That is, the random-access point in the video bitstream and the random-access point in the feature bitstream are out of sync in time. Synchronization of the random-access points means that both random-access points appear at the same time. Simultaneous random-access means that the temporal positions of the random-access points in both bitstreams are the same.

When the random-access point in the video bitstream is misaligned with the random-access point in the feature bitstream, for example, at the time when the video decoder 401 has regenerated the frame at the random-access point (e.g., time t+2 shown in Fig. 1), the machine recognition task using feature A cannot be started.

There are times when both random-access points happen to coincide. In such a case, the overall data volume (total data volume) at the time of the random-access point increases. In other words, the data transmission volume increases instantaneously.

Next, predictive encoding will be explained. The predictive encoding includes an intra prediction and an inter prediction. First, the intra prediction and the inter prediction are explained. First, the intra prediction and the inter prediction are explained for video bitstreams.

The intra prediction is a prediction that does not use an image of a reconstructed video frame whose display time is different from that of the video frame at the time of the encoding. Hereinafter, a video block encoded based on the intra prediction is referred to as an intra-coded image block. The inter prediction is a prediction that uses the image of a reconstructed video frame whose display time is different from that of the video frame at the time of the encoding. Hereinafter, a video block encoded based on inter prediction is referred to as an inter-coded image block. Inter prediction is also called motion compensation prediction.

An encoded video frame that consists only of intra-coded image blocks is referred to as an I-video frame. Another encoded video frame is referred to as a non-I video frame. As non-I video frames, there are a P (Predictive) video frame and a B (Bi-directional predicted) video frames. The B video frame may include an inter-coded image block that uses one reconstructed video frame for inter prediction and an inter-coded image block that uses two reconstructed video frames simultaneously for inter prediction.

The above concept of the intra prediction and the inter prediction can also be applied to feature bitstreams.

In the case of the feature bitstream, the prediction that does not use the features of a video frame whose display time is different from that of the video frame at the time to be encoded is referred to as intra prediction regarding features. Hereinafter, the feature encoded based on intra prediction is referred to as an intra-coded feature. A prediction using the feature of the video frame whose display time differs from that of the video frame at the time of the encoding is referred to as an inter prediction regarding the feature. Hereinafter, the feature encoded based on the inter prediction is referred to as an inter-coded feature.

A frame that consists only of intra-coded feature is referred to as an I-feature frame. Another I-feature frame is referred to as a non-I feature frame.

### Example embodiment 1.

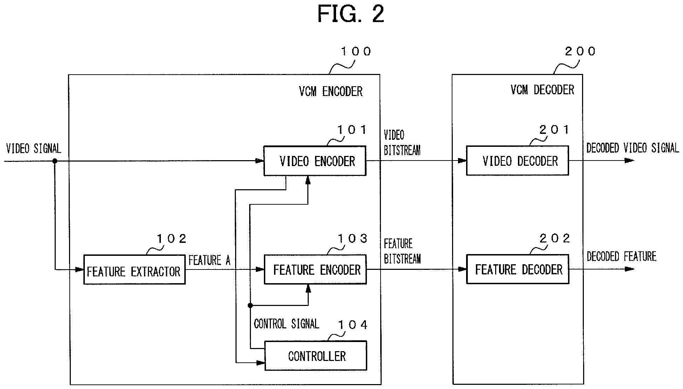

Fig. 2 is a block diagram showing the data processing system of the first example embodiment. The data processing system shown in Fig. 2 includes a VCM encoder 100 and a VCM decoder 200. The VCM encoder 100 and the VCM decoder 200 are communicatively connected through a transmission line, for example. In this example embodiment, take the case where the VCM encoder 100 generates a video bitstream and a feature bitstream related to feature A for a certain machine processing task A.

The VCM encoder 100 includes a video encoder 101, a feature extractor 102, a feature encoder 103, and a controller 104.

The video encoder 101 encodes video frames at each time of the digitized video signal with the video frame type (I video frame type or non-I video frame type) supplied by the controller 104 to generate a video bitstream. For example, the video encoder 101 performs the encoding process based on the H.266/VVC (Versatile Video Coding) standard. The video encoder 101 may perform the encoding process based on other standards such as the H.265/HEVC (High Efficiency Video Coding) standard or the H.264/AVC (Advanced Video Coding) standard.

The feature extractor 102 extracts the feature A of the video signal from the video frame at each time. The feature encoder 103 encodes the feature A with the feature frame type (I feature frame type or non-I feature frame type) supplied by the controller 104 to generate a feature bitstream.

The controller 104 determines the video frame type (video frame type) and the feature frame type (feature frame type) to be encoded by the video encoder 101 and the feature encoder 103, respectively. The controller 104 supplies the video frame type to the video encoder 101 as a control signal. The controller 104 also outputs the feature frame type to the feature encoder 103 as a control signal.

The controller 104 synchronizes the output timing of the control signal indicating I video frame and the output timing of the control signal indicating I feature frame so that simultaneous random access to the video bitstream and the feature bitstream is guaranteed. For example, the controller 104 synchronizes them when a predetermined cycle elapses. The guarantee of simultaneous random access to the video bitstream and the feature bitstream means, for example, that the random-access points in the feature bitstream and the random-access points in the video bitstream are guaranteed to be coincident in time.

Synchronizing the random-access points of the video frame with the random-access points of the feature frame means that the random-access points of both are aligned in time. Specifically, for example, for one video frame input at a certain time, the video encoder 101 performs encoding based on the I video frame type, and at the same time, the feature encoder 103 performs encoding based on the I feature frame type, in response to an instruction from the controller 104.

The VCM decoder 200 includes a video decoder 201 and a feature decoder 202.

The video decoder 201 decodes the video bitstream to generate a decoded video signal. The decoded video signal is used for human viewing or visual confirmation. The decoded video signal may be used for task X which is a different machine processing task than task A (see Fig. 17).

The feature decoder 202 decodes the feature bitstream to generate decoded feature A. The decoded feature A is used for task A of machine processing (see Fig. 17).

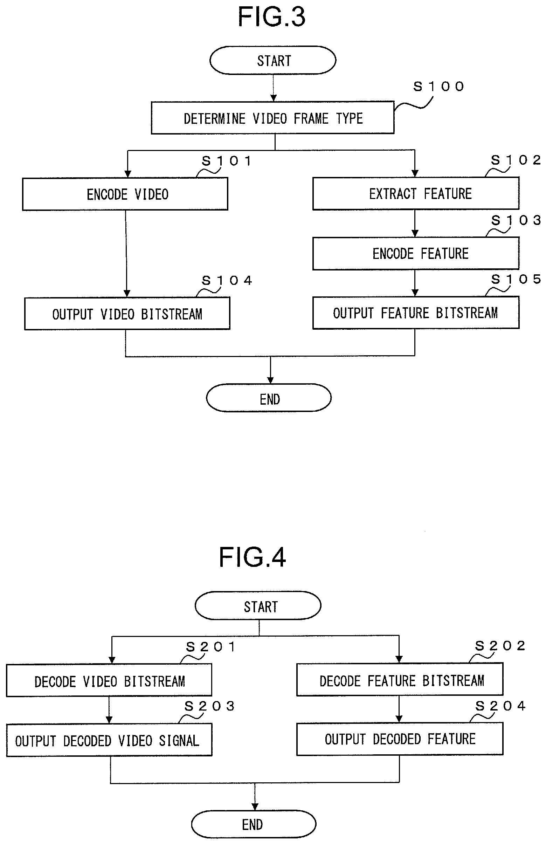

Next, the operation of the VCM encoder 100 in the first example embodiment will be explaind. Fig. 3 is a flowchart showing the operation of the VCM encoder. The process shown in Fig. 3 is executed for each frame.

The controller 104 in the VCM encoder 100 determines the video frame type and the feature frame type (step S100). As described above, for example, the controller 104 periodically determines the video frame type to be I video frame type and the feature frame type to be I feature frame type. When a cycle is used to determine the frame type, the controller 104 determines the video frame type to be the non-I video frame type and the feature frame type to be the non-I feature frame type when the predetermined cycle has not elapsed.

Then, the controller 104 outputs a control signal indicating the video frame type to the video encoder 101 and a control signal indicating the feature frame type to the feature encoder 103.

The video encoder 101 encodes video frames with the video frame type indicated by the control signal from the controller 104 to generate a video bitstream (step S101).

The feature extractor 102 extracts feature from video frames (step S102). The feature encoder 103 encodes the features with the feature frame type indicated by the control signal from the controller 104 to generate a feature bitstream (step S103).

The video encoder 101 transmits the video bitstream to a transmission line, for example (step S104). The feature encoder 103 transmits the feature bitstream to the transmission line, for example (step S105).

Next, the operation of the VCM decoder 200 in the first example embodiment will be explained. Fig. 4 is a flowchart showing the operation of the VCM decoder 200.

The video decoder 201 in the VCM decoder 200 decodes the received video bitstream to generate a decoded video signal (step S201). The feature decoder 202 decodes the feature bitstream to generate a decoded feature (step S202).

The video decoder 201 outputs the decoded video signal (step S203). The feature decoder 202 outputs the decoded feature (step S204).

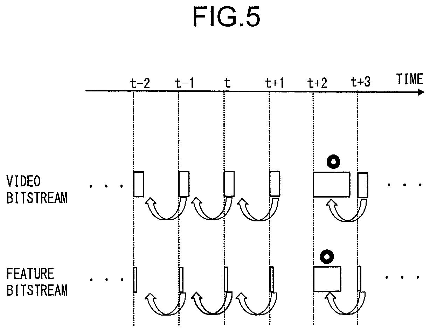

Fig. 5 is an explanatory diagram showing an example of a relationship between the video bitstream and the feature bitstream in the time direction in the first example embodiment. In

Fig. 5, arrows indicate frames at random-access points. Frames at random-access points are frames that have no dependencies with other frames. The width of the rectangle indicating a frame corresponds to the data volume.

As shown in Fig. 5, in this example embodiment, since simultaneous random access to the video bitstream and the feature bitstream is guaranteed, random-access points in the video bitstream and random-access points in the feature bitstream are aligned.

As a result, a system using the video bitstream and the feature bitstream output by the VCM decoder 200 can immediately start a machine recognition task based on the features at the same time as a certain video frame.

### Example embodiment 2.

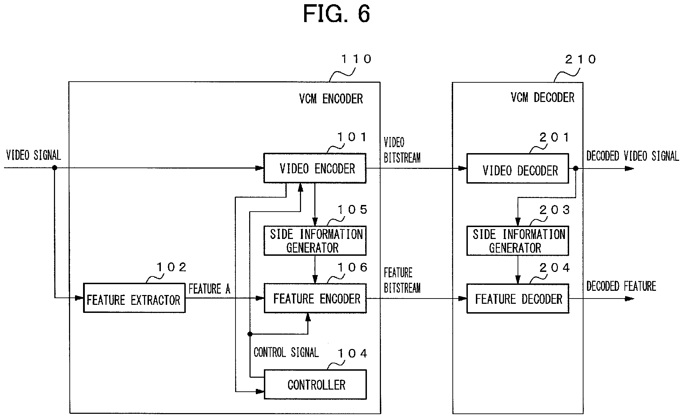

Fig. 6 is a block diagram showing the data processing system of the second example embodiment. The data processing system shown in Fig. 6 includes a VCM encoder 110 and a VCM decoder 210. The VCM encoder 110 and the VCM decoder 210 are communicatively connected through a transmission line, for example. In this example embodiment, too, an example is taken of the case where the VCM encoder 110 generates a video bitstream and a feature bitstream related to feature A for task A of a certain machine processing.

The VCM encoder 110 includes a video encoder 101, a feature extractor 102, a side information generator 105, a feature encoder 106, and a controller 104. The functions of the video encoder 101, the feature extractor 102, and the controller 104 are the same as those in the first example embodiment.

The side information generator 105 generates information related to the feature A extracted by the feature extractor 102 from the reconstructed video signal generated inside the video encoder 101. Hereinafter, the information related to the feature A extracted by the feature extractor 102 is referred to as side information A'.

The reconstructed video signal in the video encoder 101 is a video signal (video frame) generated by the decoding function included in the video encoder 101. The side information generator 105, as an example, generates side information A' by the same process as that executed by the feature extractor 102.

The feature encoder 106 has the following function in addition to the function of the feature encoder 103 in the first example embodiment. That is, when encoding the I feature frame type, the feature encoder 106 reduces data volume of the feature frame by encoding the feature frame based on the correlation between the feature A and the side information A'.

Take the case in which the side information generator 105 generates side information A' from the reconstructed video signal in the video encoder 101 by the same process as that executed by the feature extractor 102 as an example. In such a case, the side information generator 105 extracts a feature from the reconstructed video signal as side information A'. The feature encoder 106 can reduce data volume of the feature frame by predictive encoding the feature A with the feature (side information A') extracted by the side information generator 105. This is because the feature A of the input video signal and the feature of the reconstructed video signal are similar. The higher the bit rate of the video bitstream, the higher the similarity between the feature A of the video signal and the reconstructed video signal.

The feature encoder 106 may also use the correlation between the feature A and the side information A' to encode feature frames when encoding non-I feature frame types.

The VCM decoder 210 includes a video decoder 201, a side information generator 203, and a feature decoder 204. The video decoder 201 is the same as that in the first example embodiment. That is, the video decoder 201 decodes the video bitstream to generate a decoded video signal. The decoded video signal is used for human viewing and visual confirmation. The decoded video signal may be used for task X which is a different machine processing task than task A (see Fig. 17).

The side information generator 203 operates in the same way as the side information generator 105 in the VCM encoder 110 to generate side information A' when a video frame of I video frame type is decoded. However, the side information generator 105 generates side information A' from the reconstructed video signal, while the side information generator 203 generates the side information A' from the decoded video signal.

The feature decoder 204 has the following function in addition to the function of the feature decoder 202 in the first example embodiment. That is, when decoding a feature frame of I feature frame type, the feature decoder 204 decodes the feature frame based on the correlation between the feature A and the side information A'.

The feature decoder 204 can decode feature frames by performing the reverse process of the predictive encoding by the feature encoder 106. For example, the feature decoder 204 predictively decodes the features decoded from the feature bitstream with the features extracted by the side information generator 105.

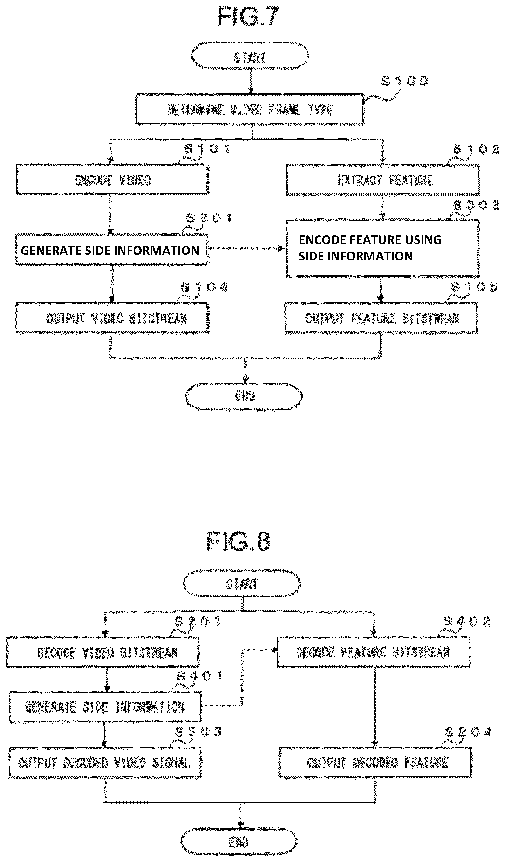

Next, the operation of the VCM encoder 110 in the second example embodiment will be explained. Fig. 7 is a flowchart showing the operation of the VCM encoder 110. The process shown in Fig. 7 is executed for each frame.

The processes of steps S100-S102 is the same as in the first example embodiment.

In this example embodiment, the side information generator 105 generates side information A' from the reconstructed video signal generated inside the video encoder 101 (step S301).

The feature encoder 106 predictively encodes the feature A with the feature (side information A') extracted by the side information generator 105 to generate a feature bitstream (step S302).

As in the case of the first example embodiment, the video encoder 101 transmits the video bitstream to a transmission line, for example (step S104). As in the case of the first example embodiment, the feature encoder 103 transmits the feature bitstream to the transmission line, for example (step S105).

Next, the operation of the VCM decoder 210 in the second example embodiment will be explained. Fig. 8 is a flowchart showing the operation of the VCM decoder 210.

As in the first example embodiment, the video decoder 201 decodes the received video bitstream to generate a decoded video signal (step S201). The side information generator 203 generates side information A' from the decoded video signal when a video frame of I video frame type is decoded (step S401).

The feature decoder 204 decodes the feature bitstream and generates a decoded feature as in the first example embodiment (step S402). However, as described above, in this example embodiment, the feature decoder 204 decodes a feature frame using the correlation between the feature A and the side information A' when decoding a feature frame of the I feature frame type.

The video decoder 201 outputs the decoded video signal (step S203). The Feature decoder 204 outputs decoded feature (step S204).

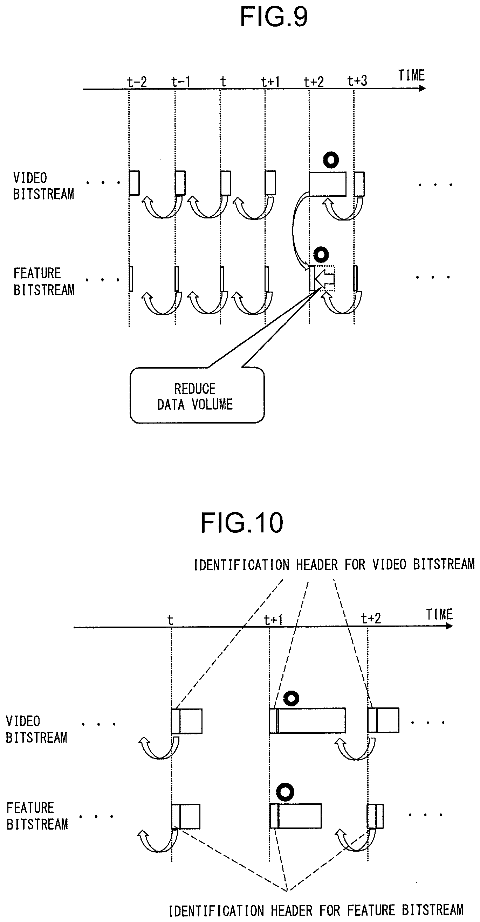

Fig. 9 is an explanatory diagram showing an example of a relationship between the video bitstream and the feature bitstream in the time direction in the second example embodiment. In Fig. 9, the arrows (except for the arrows related to "reduced data volume") indicate frames at random-access points. A frame at a random-access point is a frame that has no dependency with other frames. The width of the rectangle indicating a frame corresponds to the data volume.

As shown in Fig. 9, in this example embodiment as well, since simultaneous random access to the video bitstream and the feature bitstream is guaranteed, random-access points in the video bitstream and random-access points in the feature bitstream are synchronized.

Furthermore, in this example embodiment, since feature frames are encoded using the correlation between feature A and side information A', the data volume of feature frames at the random-access point is reduced. As a result, the increase in the total data volume at the random-access point is suppressed.

### [Modification 1]

In the first and second example embodiments, as shown in Fig. 10, the video encoder 101 and the feature encoders 103, 106 may add an identification header to identify the random-access point at the beginning of the video frame data and feature frame data.

The identification header of video frame data includes information indicating whether the frame is an I video frame, a P video frame, or a B video frame. The identification header of the feature frame data includes information indicating whether the frame is an I feature frame or a non-I feature frame.

In the case of the second example embodiment, the identification header of the feature frame data further includes information indicating whether or not the data was encoded using side information.

By adding the above identification header, the decoding side can check the random accessibility without decoding contents of the video frame data and the feature frame data. Therefore, interoperability between the encoding side and the decoding side is enhanced.

### [Modification 2]

In the second example embodiment, the feature extracted from the video frame of the reconstructed video signal by the same process executed by the feature extractor 102 is used as side information A'. However, it is also possible to use the encoded data itself as the side information. Hereinafter, the feature extracted by the same process as that executed by the feature extractor 102 is denoted as feature A'.

For example, error correcting codes can be applied as described in non-patent literature 2.

Let the encoded data of feature A extracted by the feature extractor 102 from the video frame at a certain time t of the input video signal be Y(A, t). In addition, let the encoded data of feature A' be side information Y(A', t).

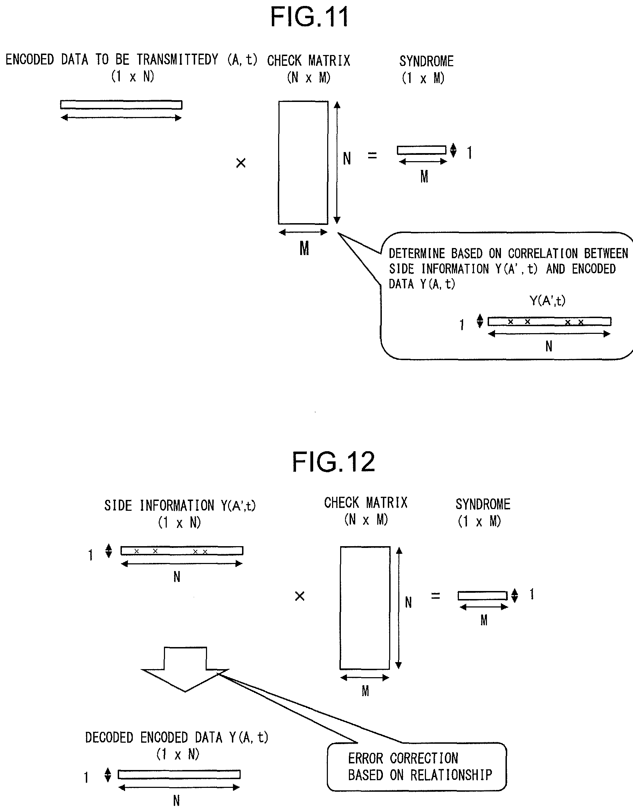

The encoding of the feature A' is shown in Fig. 11. That is, the feature encoder 106 sets a syndrome, which is obtained by multiplying the encoded data Y(A,t) to be transmitted by the check matrix to encoded data.

As shown in Fig. 11, the feature encoder 106 determines the number of columns M of the check matrix based on the correlation between the encoded data Y(A, t) (N-bit data) to be transmitted and the side information Y(A', t). The feature encoder 106 generates a syndrome (M-bit data) by multiplying the encoded data Y(A,t) by the check matrix of N rows and M columns. Then, the feature encoder 106 outputs the syndrome as feature frame data. It should be noted that if M < N, the data volume is reduced.

The decoding of the feature A' is shown in Fig. 12. That is, the feature decoder 204 can obtain the decoded feature by using Y (A, t), which is the error-corrected based on the relationship between the side information Y(A', t), the check matrix, and the syndrome (M-bit data), as the decoded value.

The value of each element of the check matrix can be pre-shared between the encoding side and the decoding side to further reduce the data volume of each feature frame data. In such a case, the feature encoder 106 only needs to include the ID of the check matrix used for the number of columns M in the identification header.

In each of the above example embodiments and each of the above modifications, one feature is used as an example to simplify the explanation. However, this invention can be applied to multiple features.

When encoding and decoding feature data using error correcting codes in the second modification is applied to multiple features, instead of calculating the syndrome independently for each feature frame data, the syndrome may be calculated for all feature frame data concatenated together. In such a case, the effect is to suppress the overhead caused by applying a check matrix with a small number of columns when the feature frame data for each feature is short.

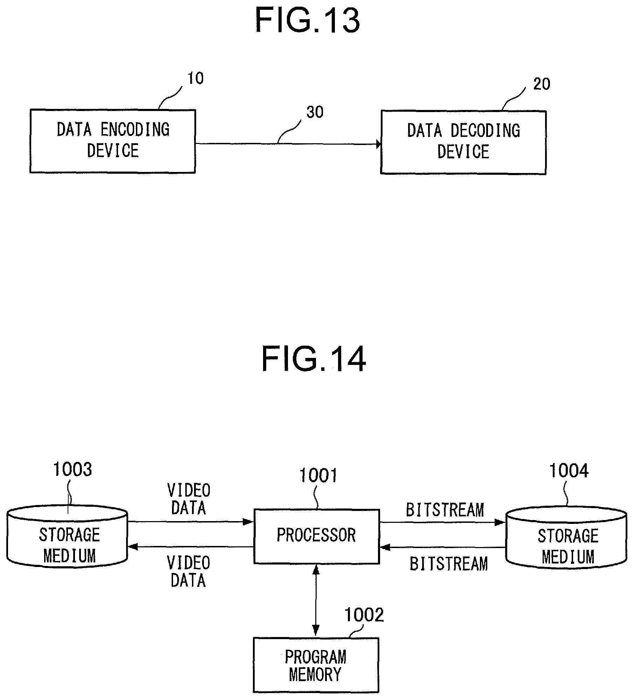

Fig. 13 is a block diagram showing a specific configuration example of a data processing system. The data processing system shown in Fig. 13 is a system in which a data encoding device 10 (corresponding to the VCM encoder 100 in the first example embodiment or the VCM encoder 110 in the second example embodiment) and a data decoding device 20 (corresponding to the VCM decoder 200 in the first example embodiment or the VCM decoder 210) are connected by a transmission line (wireless or wired transmission line) 30.

In the data processing system, the data encoding device 10 can generate the video bitstream and the feature bitstream having the features described in each of the above example embodiments. In addition, in the data processing system, the data decoding device 20 can decode the video bitstream and feature bitstream with the features described in the above example embodiments.

Although it is possible to configure the above example embodiments by hardware, they may be realized by a computer program.

The information processing system shown in Fig. 14 includes a processor 1001 such as a central processing unit (CPU), a program memory 1002, a storage medium 1003 for storing video data, and a storage medium 1004 for storing bitstreams. The storage medium 1003 and the storage medium 1004 may be separate storage media, or they may be storage areas in the same storage medium. A magnetic storage medium such as a hard disk can be used as the storage medium.

In the information processing system, the program memory 1002 stores a program (data encoding program or data decoding program) to realize the functions of each block indicated in each of the above example embodiments.

The processor 1001 realizes the functions of the data encoding device 10, the VCM encoders 100, 110, the data decoding device 20, and the VCM decoders 200, 210 shown in each example embodiment by executing processes according to the programs stored in the program memory 1002.

For example, the processor 1001 executes processes according to the data encoding program (specifically, the VCM encoding program) to realize the function of each block in the VCM encoder 100 shown in Fig. 2, thereby realizing the functions of the VCM encoder 100. For example, the processor 1001 executes processes according to the data decoding program (specifically, the VCM decoding program) to realize the function of each block in the VCM decoder 200 shown in Fig. 2, thereby realizing the functions of the VCM decoder 200.

At least the program memory 1002 is a non-transitory computer readable medium. However, the program may be stored in various types of transitory computer readable media. The transitory computer readable medium is supplied with the program through, for example, a wired or wireless communication channel, i.e., through electric signals, optical signals, or electromagnetic waves.

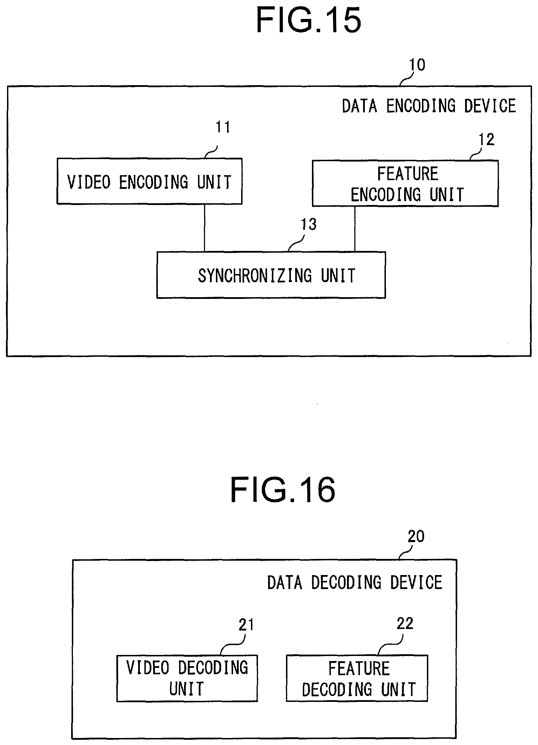

Fig. 15 is a block diagram showing a main part of the data encoding device. The data encoding device 10 shown in Fig. 15 comprises a video encoding unit (video encoding means) 11 (in the example embodiment, realized by the video encoder 101) which encodes a video to generate a video bitstream, a feature encoding unit (feature encoding means) 12 (in the example embodiment, realized by the feature encoder 103 or the feature encoder 106) which encodes a feature of the video to generate a feature bitstream, and synchronizing unit (synchronizing means) 13 (in the example embodiment, realized by the controller 104) which synchronizes a random-access point in the video bitstream with a random-access point in the feature bitstream.

The data encoding device 10 may comprise a first feature extraction unit (first feature extraction means) (in the example embodiment, realized by the side information generator 105) which extracts the feature of an input video, and a second feature extraction unit (second feature extraction means) (in the example embodiment, realized by the feature encoder 106) which extracts the feature of a video generated by a decoding process included in an encoding process by the video encoding means, wherein the feature encoding unit 12 encodes the feature based on a correlation between the feature extracted from the input video and the feature extracted from the video generated by the decoding process.

Fig. 16 is a block diagram showing a main part of the data decoding device. The data decoding device 20 shown in Fig. 16 comprises a video decoding unit (video decoding means) 21 which receives a video bitstream which is generated by encoding a video and in which a random-access point is set to decode the video bitstream, and a feature decoding unit (feature decoding means) 22 which receives a feature bitstream which is generated by encoding a feature of the video and in which a random-access point that is aligned in time with the random-access point in the video bitstream is set to decode the feature bitstream.

The data decoding device 20 may comprise a feature extraction unit (feature extraction means) (in the example embodiment, realized by the side information generator 203) the feature of the decoded video obtained by decoding the video bitstream, wherein the feature decoding unit 22 for performs decoding based on a correlation between the feature obtained by decoding the feature bitstream and the feature extracted from the decoded video.

A part of or all of the above example embodiments may also be described as, but not limited to, the following supplementary notes.

(Supplementary note 1) A data encoding device, comprising:
video encoding means for encoding a video to generate a video bitstream;
feature encoding means for encoding a feature of the video to generate a feature bitstream, and
synchronizing means for synchronizing a random-access point in the video bitstream with a random-access point in the feature bitstream.

(Supplementary note 2) The data encoding device according to Supplementary note 1, comprising
first feature extraction means for extracting the feature of an input video, and
second feature extraction means for extracting the feature of a video generated by a decoding process included in an encoding process by the video encoding means, wherein
the feature encoding means encodes the feature based on a correlation between the feature extracted from the input video and the feature extracted from the video generated by the decoding process.

(Supplementary note 3) The data encoding device according to Supplementary note 2, wherein:
the feature encoding means predictively encodes the feature extracted from the input video with the feature extracted from the video generated by the decoding process.

(Supplementary note 4) A data decoding device, comprising:
video decoding means for receiving a video bitstream which is generated by encoding a video and in which a random-access point is set to decode the video bitstream, and
feature decoding means for receiving a feature bitstream which is generated by encoding a feature of the video and in which a random-access point that is aligned in time with the random-access point in the video bitstream is set to decode the feature bitstream.

(Supplementary note 5) The data decoding device according to Supplementary note 4, comprising
feature extraction means for extracting the feature of the decoded video obtained by decoding the video bitstream, wherein
the feature decoding means performs decoding based on a correlation between the feature obtained by decoding the feature bitstream and the feature extracted from the decoded video.

(Supplementary note 6) The data decoding device according to Supplementary note 5, wherein:
the feature decoding means predictively decodes the feature decoded from the feature bitstream with the feature extracted by the feature extraction means.

(Supplementary note 7) A data encoding method, comprising:
encoding a video to generate a video bitstream;
encoding a feature of the video to generate a feature bitstream, and
synchronizing a random-access point in the video bitstream with a random-access point in the feature bitstream.

(Supplementary note 8) The data encoding method according to Supplementary note 7, comprising
extracting the feature of an input video,
extracting the feature of a video generated by a decoding process included in an video encoding process, and
encoding the feature based on a correlation between the feature extracted from the input video and the feature extracted from the video generated by the decoding process.

(Supplementary note 9) A data decoding method, comprising:
receiving a video bitstream which is generated by encoding a video and in which a random-access point is set to decode the video bitstream; and
receiving a feature bitstream which is generated by encoding a feature of the video and in which a random-access point that is aligned in time with the random-access point in the video bitstream is set to decode the feature bitstream.

(Supplementary note 10) The data decoding method according to Supplementary note 9, comprising:
extracting a feature of the decoded video obtained by decoding the video bitstream; and
decoding based on a correlation between a feature obtained by decoding the feature bitstream and a feature extracted from the decoded video.

(Supplementary note 11) A data processing system, comprising:
the data encoding device according to any one of Supplementary note 1 to Supplementary note 3; and
the data decoding device according to any one of Supplementary note 4 to Supplementary note 6.

(Supplementary note 12) A data encoding program for causing a computer to execute:
a process of encoding a video to generate a video bitstream;
a process of encoding a feature of the video to generate a feature bitstream, and
a process of synchronizing a random-access point in the video bitstream with a random-access point in the feature bitstream.

(Supplementary note 13) A data decoding program for causing a computer to execute:
a process of receiving a video bitstream which is generated by encoding a video and in which a random-access point is set to decode the video bitstream; and
a process of receiving a feature bitstream which is generated by encoding a feature of the video and in which a random-access point that is aligned in time with the random-access point in the video bitstream is set to decode the feature bitstream.

Although the invention of the present application has been described above with reference to example embodiments, the present invention is not limited to the above example embodiments. Various changes can be made to the configuration and details of the present invention that can be understood by those skilled in the art within the scope of the present invention.

### Reference Signs List

10 Data encoding device
11 Video encoding unit
12 Feature encoding unit
13 Synchronization unit
20 Data decoding device
21 Video decoding unit
22 Feature decoding unit
30 Transmission line
100, 110 VCM encoder
101 Video encoder
102 Feature extractor
103, 106 Feature encoder
104 Controller
105 Side information generator
200, 210 VCM decoder
201 Video decoder
202, 204 Feature decoder
203 Side information generator
1001 Processor
1002 Program memory
1003, 1004 Storage medium

## Claims

1. A data encoding device, comprising:
video encoding means for encoding a video to generate a video bitstream;
feature encoding means for encoding a feature of the video to generate a feature bitstream, and
synchronizing means for synchronizing a random-access point in the video bitstream with a random-access point in the feature bitstream.

2. The data encoding device according to claim 1, comprising
first feature extraction means for extracting the feature of an input video, and
second feature extraction means for extracting the feature of a video generated by a decoding process included in an encoding process by the video encoding means, wherein
the feature encoding means encodes the feature based on a correlation between the feature extracted from the input video and the feature extracted from the video generated by the decoding process.

3. A data decoding device, comprising:
video decoding means for receiving a video bitstream which is generated by encoding a video and in which a random-access point is set to decode the video bitstream, and
feature decoding means for receiving a feature bitstream which is generated by encoding a feature of the video and in which a random-access point that is aligned in time with the random-access point in the video bitstream is set to decode the feature bitstream.

4. The data decoding device according to claim 3, comprising
feature extraction means for extracting the feature of the decoded video obtained by decoding the video bitstream, wherein
the feature decoding means performs decoding based on a correlation between the feature obtained by decoding the feature bitstream and the feature extracted from the decoded video.

5. A data encoding method, comprising:
encoding a video to generate a video bitstream;
encoding a feature of the video to generate a feature bitstream, and
synchronizing a random-access point in the video bitstream with a random-access point in the feature bitstream.

6. The data encoding method according to claim 5, comprising
extracting the feature of an input video,
extracting the feature of a video generated by a decoding process included in an video encoding process, and
encoding the feature based on a correlation between the feature extracted from the input video and the feature extracted from the video generated by the decoding process.

7. A data decoding method, comprising:
receiving a video bitstream which is generated by encoding a video and in which a random-access point is set to decode the video bitstream; and
receiving a feature bitstream which is generated by encoding a feature of the video and in which a random-access point that is aligned in time with the random-access point in the video bitstream is set to decode the feature bitstream.

8. The data decoding method according to claim 7, comprising:
extracting a feature of the decoded video obtained by decoding the video bitstream; and
decoding based on a correlation between a feature obtained by decoding the feature bitstream and a feature extracted from the decoded video.

9. A data processing system, comprising:
the data encoding device according to claim 1 or claim 2; and
the data decoding device according to claim 3 or claim 4.

10. A computer readable storage medium for storing a data encoding program for causing a computer to execute:
a process of encoding a video to generate a video bitstream;
a process of encoding a feature of the video to generate a feature bitstream, and
a process of synchronizing a random-access point in the video bitstream with a random-access point in the feature bitstream.
